# EUROPEAN PATENT SPECIFICATION

(11) **EP 4 335 798 B1**
(45) Date of publication and mention of the grant of the patent: **30.07.2025**
(21) Application number: 21943852.0
(22) Date of filing: 11.11.2021
(51) Int. Cl.: B65G 49/05, B67B 3/20, B67B 7/18, B67B 7/14, B01L 3/14

(54) **TEST TUBE CAP SCREWING DEVICE**
SCHRAUBVORRICHTUNG FÜR TESTRÖHRCHENKAPPE
DISPOSITIF DE VISSAGE DE BOUCHON DE TUBE À ESSAI

(30) Priority: 03.06.2021 CN 202110620277
(43) Date of publication of application: 13.03.2024
(73) Proprietor: Beijing Huironghe Technology Co., Ltd, Beijing 101102 (CN)
(72) Inventor: YANG, Fucheng, Beijing 101102 (CN); LI, Chaowen, Beijing 101102 (CN)
(74) Representative: Bayramoglu et al.
(86) International application number: PCT/CN2021/130089
(87) International publication number: WO 2022/252500

(56) References cited:
- EP-A2- 0 972 744
- EP-B1- 0 557 828
- CN-A- 112 198 324
- CN-A- 113 371 463
- CN-U- 206 901 732
- CN-U- 212 050 462
- CN-U- 212 976 226
- US-B1- 6 257 091

## Description

### TECHNICAL FIELD

The present application relates to the field of medical testing equipment or biological experimental equipment, in particular to a test tube cap screwing device.

### BACKGROUND

Test tubes are commonly used vessels in the fields of biology and chemistry, and are widely used in hospitals, inspection institutions, etc. At present, in the medical field, such as in terms of specimen testing, it is necessary to open a test tube cap multiple times to add substances to the test tube or mix samples during the use of the test tube. Upon the completion of the operation, the corresponding test tube cap needs to be screwed on for use.

Manual operations are generally used at the present stage, but the test tube caps need to be unscrewed and screwed in a one-to-one correspondence manner, and sterile gloves need to be replaced every time, which is inefficient and can easily cause sample contamination. At the same time, after the test tube cap is removed, once the substance addition or sample mixing operation is completed, the test tube cap is usually screwed on again manually, without ensuring one-to-one correspondence.

In order to solve the above problems, some relevant personnel have also developed related technologies to automatically open and close the test tube caps without manual operation, thereby liberating manual work and improving work efficiency. However, test tube cap opening and closing devices in the prior art are all clamping devices each having two parts, which clamp a test tube body and a test tube cap respectively; and a rotating mechanism is additionally provided to rotate the test tube cap or the test tube body to complete the opening and closing actions of the test tube cap, so the entire structure is relatively complex. Therefore, in experimental processes of some experimental equipment with more control procedures and more complex control elements, a test tube cap screwing device with a simple and compact structure and low cost is necessary. EP0972744A2 discloses an automatic decapper with a screwing device according to the preamble of claim 1. The automatic decapper removes caps from capped test tubes by gripping the cap on a test tube with the upper grippers and holding the cap stationary while the test tube is rotated and translated downward with lower grippers.

### SUMMARY

An object of the present application is to provide a test tube cap screwing device, which only needs to clamp a test tube cap and use a rotating mechanism to rotate a test tube body. Compared with the prior art having a structure in which a test tube body and a test tube cap need to be clamped separately and a rotating body is additionally provided, the test tube cap screwing device is simple and compact in structure, low in cost, and flexible and convenient to use.

In order to fulfill the above object, the technical solution provided by the present application is a test tube cap screwing device according to claim 1.

Further, preferably, the clamping assembly further includes a cage, and a plurality of cylindrical rollers is disposed on the cage; when the test tube body is spaced apart from the test tube pad, the test tube body is coaxial with the test tube bin, and the test tube body is spaced apart from the cylindrical rollers;
a plurality of gradient cavities is formed between the cage and the test tube bin; the cylindrical rollers are located in the gradient cavities in one-to-one correspondence; the cylindrical rollers are spaced apart from and then prop and press against the test tube body when moving in the gradient cavities; and
the cage is connected to the rotating shaft, that is, the rotating shaft can drive the cage to rotate.

Further, preferably, each gradient cavity is an arc-shaped cavity.

Further, preferably, the cylindrical rollers and the gradient cavities are both aligned around an axis of the cage.

Further, preferably, magnets are installed on the test tube bin; and each magnet is installed at the center of the gradient cavity and is configured to generate a magnetic force to attract the cylindrical roller.

Further, preferably, a plurality of magnets is provided; and the plurality of magnets, the plurality of gradient cavities and the plurality of cylindrical rollers are installed in one-to-one correspondence.

Further, preferably, the rotating assembly further includes a base, a bearing is installed on the base, the test tube bin is installed on the base and props against the bearing, and the test tube bin can rotate relative to the base around an axis of the test tube bin.

In summary, the present application has the following beneficial effects.
(1) The test tube cap can be screwed by this device just by grabbing the test tube cap with the grabbing unit and then allowing the test tube body to move downward, prop against the test tube pad and move along the slope of the test tube pad till inclination. The inclined test tube body props against the cylindrical rollers, and the rotating assembly drives the test tube bin and the cage to rotate. At this time, the cylindrical rollers are driven by a friction force generated by propping against the test tube body to move in the gradient cavities. The further the movement of the cylindrical rollers towards the edge, the greater the relative pressure between the cylindrical rollers and the test tube body, thus clamping the test tube body. At this time, the test tube cap does not move, while the test tube body rotates to achieve the cap screwing action. During the entire process, one grabbing unit and one rotating mechanism are used to rotate the test tube body. Compared with the prior art having a structure in which the test tube body and the test tube cap need to be clamped separately and the rotating body is additionally provided, the test tube cap screwing device is simple and compact in structure, low in cost, and flexible and convenient to use.
(2) The magnets are provided. When the test tube body is separated from the test tube cap, the cylindrical roller located at the edge of the gradient cavity will gradually move to the center of the gradient cavity under the attraction of the magnets, so the center of the gradient cavity has a large space. When the cylindrical roller moves from the edge to the center, the mutual pressure between the cylindrical rollers and the test tube body gradually decreases until the test tube body is automatically released, completing the action of separating the tube cap. Therefore, the test tube cap screwing device is simple in structure, convenient to operate and high in automation degree.
(3) The entire structure does not need to be equipped with a clamping device to separately clamp the test tube body, nor is there a rotating mechanism for the test tube cap. Therefore, the test tube cap screwing device is compact in structure and low in cost.

### BRIEF DESCRIPTION OF THE DRAWINGS

FIG. 1 is a schematic structural diagram of a test tube cap screwing device of the present application;
FIG. 2 is a cross-sectional view of a test tube cap screwing device of the present application; and
FIG. 3 is a sectional view of a clamping assembly in a test tube cap screwing device of the present application.

In the figures, reference signs represent the following components:
1-grabbing unit; 2-rotating unit; 3-test tube cap; 4-test tube body; 5-test tube pad; 6-rotating shaft; 7-test tube bin; 8-cage; 9-base; 10-cylindrical roller; 11-magnet; 12-bearing; 13-gradient cavity.

### DETAILED DESCRIPTION

The present application will be further described in detail below in conjunction with the accompanying drawings.

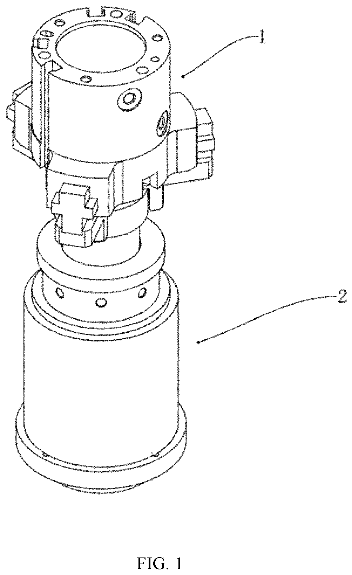

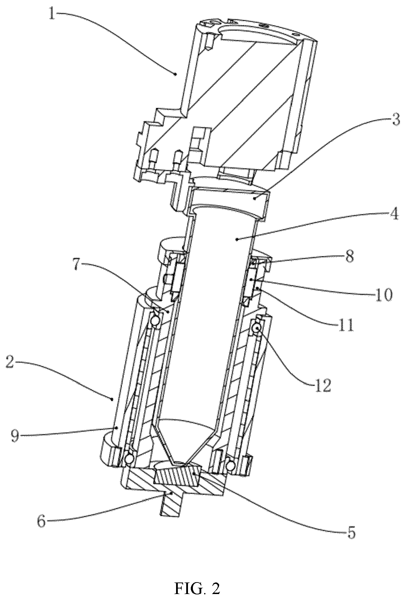

The present application provides a test tube cap screwing device. As shown in FIG. 1 and FIG. 2, the test tube cap screwing device includes a grabbing unit 1 and a rotating unit 2. The grabbing unit 1 is used to grab a test tube cap 3, and the rotating unit 2 is used to rotate a test tube body 4. When the test tube cap 3 is in good contact with the test tube body 4, the cap screwing action of the test tube can be completed when the test tube cap 3 does not rotate and the test tube body 4 rotates accordingly. The grabbing unit 1 in the test tube cap screwing device of the present application can achieve a grabbing action by, but not limited to, a commercially available manipulator.

As shown in FIG. 2, the rotating unit 2 directly faces the grabbing unit 1. In order to ensure that the test tube cap 3 can directly cover the test tube body 4, the rotating unit 2 includes a clamping assembly and a rotating assembly. The clamping assembly and the rotating assembly cooperate to clamp and drive the test tube body 4 to rotate. According to the test tube cap screwing device in the present application, the clamping assembly includes a test tube bin 7, and the test tube body 4 is placed in the test tube bin 7. A cage 8 is further disposed in the test tube bin 7, the cage 8 is coaxial with the test tube bin 7, and a plurality of cylindrical rollers 10 is disposed on the cage 8. The cage 8 sleeves the outside of the test tube body 4 and is spaced apart from the test tube body 4. When the test tube body 4 is located in the test tube bin 7 and is coaxial with the test tube bin 7 and the cage 8, the test tube body 4 is also spaced apart from the cylindrical rollers 10.

A test tube pad 5 is disposed at the bottom of the test tube bin 7. The test tube pad 5 is located directly below the test tube body 4. One side of the test tube pad 5 facing the test tube body 4, that is, the top side facing the test tube body 4, is set as a slope which has an included angle with the horizontal plane. Before the test tube cap 3 is screwed to the test tube body 4, that is, when the test tube body 4 is coaxial with the test tube bin 7 and the cage 8, the test tube body 4 is spaced apart from the test tube pad 5. During the cap screwing process of the test tube body 4, the test tube body 4 gradually contacts the test tube pad 5 and gradually presses the test tube pad 5 downward.

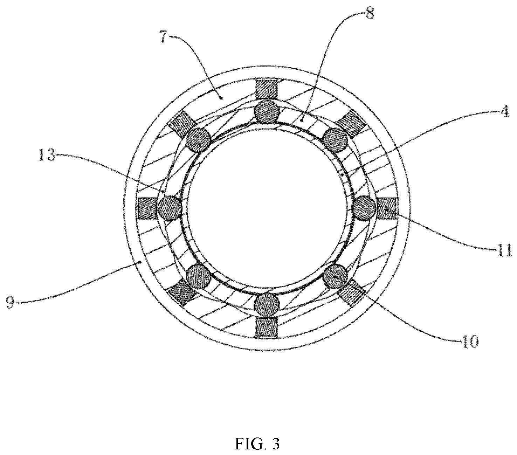

As shown in FIG. 3, it can be seen that a plurality of gradient cavities 13 is formed between the test tube bin 7 and the cage 8. The cylindrical rollers 10 are located in the gradient cavities 13, and one gradient cavity 13 corresponds to one cylindrical roller 10, and the cylindrical roller 10 can move in the gradient cavity 13. In addition, in the movement process of the cylindrical roller 10 in the gradient cavity 13, due to the spatial change of the gradient cavity 13, the cylindrical roller 10 is spaced apart from, then props against, and finally presses against the test tube body 4 each other. The embodiment is as follows: each gradient cavity 13 is set as an arc-shaped cavity; when the test tube body 4 is coaxial with the test tube bin 7 and the cage 8, the test tube body 4 is spaced apart from the cylindrical roller 10; and at this time, the cylindrical roller 10 is located at a maximum space of the gradient cavity 13, that is, located at the very center of the gradient cavity 13. When the test tube body 4 props against the cylindrical roller 10, the cylindrical roller 10 will move to a small space in the gradient cavity 13 under the driving of a friction force with the test tube body 4. A further embodiment of the present application lies in that both the cylindrical rollers 10 and the gradient cavities 13 are provided in multiple numbers and are aligned around an axis of the cage 8.

The rotating assembly includes a rotating shaft 6, which is connected to the test tube bin 7 and the cage 8. The rotating shaft 6 is used to drive the test tube bin 7 and the cage 8 to rotate.

When a cap screwing action is required for the test tube body 4, the grabbing unit 1 grabs the test tube cap 3, puts it on the test tube body 4 and presses the test tube body 4. The test tube body 4 is pressed downward to prop against the test tube pad 5 and becomes inclined along the slope of the test tube pad 5, and the inclined test tube body 4 begins to prop against the cylindrical roller 10. The greater the inclination angle of the test tube body 4, the greater the propping pressure between the test tube body 4 and the cylindrical roller 10, and the greater the friction therebetween.

A working principle of the test tube cap screwing device in the present application is as follows: the grabbing unit 1 grabs the test tube cap 3, puts it on the test tube body 4 and presses the test tube body 4 downward; the test tube body 4 props against the test tube pad 5 downward and becomes inclined, and props against the cylindrical roller 10; the rotating shaft 6 drives the test tube bin 7 and the cage 8 to rotate; and the test tube body 4 and the cage 8 tend to rotate relative to each other. However, due to the propping and pressing actions between the test tube body 4 and the cylindrical rollers 10, a friction force is produced between the cylindrical rollers 10 and the test tube body 4, so a rotation speed of the cage 8 is lower than that of the test tube bin 7. At this time, the cylindrical roller 10 moves to one side at the center of the gradient cavity 13. Since the space on one side of the gradient cavity 13 gradually becomes smaller, the cylindrical roller 10 gradually protrudes toward one side of the test tube body 4, and a pressure between the test tube body 4 and the cylindrical rollers 10 gradually increases until the test tube body 4 is clamped by the plurality of cylindrical rollers 10. At this time, the test tube body 4 rotates together with the test tube bin 7, and the test tube cap 3 does not move, thus completing the cap screwing action of the test tube cap 3. Similarly, when the test tube cap 3 is unscrewed from the test tube body 4, the same working principle is used, that is, the grabbing unit 1 is first used to grab the test tube cap 3, and then the clamping assembly and the rotating assembly cooperate to press and rotate the test tube body 4, thereby completing the action of removing the test tube cap 3 from the test tube body 4.

A further embodiment of the present application is as follows: as shown in FIG. 3, the magnets 11 are further installed on the test tube bin 7, and each magnet 11 is installed at the center of the gradient cavity 13. When the test tube cap 3 is screwed to the test tube body 4 or the test tube cap 3 is removed from the test tube body 4, the rotating assembly stops acting. At this time, the cylindrical roller 10 returns to the very center of the gradient cavity 13 under the attraction of the magnet 11. In this case, the cylindrical roller 10 releases the test tube body 4 again. At this time, the test tube body 4 can be taken out and a new test tube body 4 can be placed to complete the next step.

There may also be a plurality of magnets 11, and the plurality of magnets 11 are arranged in one-to-one correspondence with the plurality of gradient cavities 13 and the plurality of cylindrical rollers 10, that is, a corresponding magnet 11 is installed at the center of each gradient cavity 13.

In order to ensure an attractive appearance and facilitate installation and use, the rotating assembly is further provided with a base 9, a bearing 12 is installed on the base 9, the test tube bin 7 is installed in the base 9 and props against the bearing 12, and the test tube bin 7 can rotate relative to the base 9 around the axis of the test tube bin 7. The entire test tube cap screwing device has a simple and compact structure and low cost, and is flexible and convenient to use. There is no need to add any rotating mechanism for rotating the test tube cap.

The above are only preferred embodiments of the present application. The protection scope of the present application is not limited to the above-mentioned embodiments. It should be pointed out that for those of ordinary skill in the art, several improvements and modifications may be made without departing from the principles of the present application, wherein the invention and the scope of protection is defined by the following claims.

## Claims

1. A test tube cap(3) screwing device, including:
a grabbing unit(1) for grabbing a test tube cap(3); and
a rotating unit(2) directly facing the grabbing unit(1) and including:
a clamping assembly including a test tube bin(7) for accommodating the test tube body(4), a test tube pad(5), a cylindrical roller(10); and
a rotating assembly including a rotating shaft(6) configured to drive the test tube bin(7) to rotate;
**characterized in that**
the test tube pad(5) is disposed at the bottom of the test tube bin(7); and one side of the test tube pad(5) facing the test tube body(4) is disposed to be a slope, wherein when a cap screwing action is required for the test tube body(4), the grabbing unit(1) grabs the test tube cap(3), puts the test tube cap(3) on the test tube body(4) and presses the test tube body(4), and the test tube body(4) is pressed downward to prop against the test tube pad(5) and becomes inclined along the slope of the test tube pad(5) and props against the cylindrical roller(10).

2. The test tube cap(3) screwing device according to claim 1, wherein the clamping assembly further includes a cage(8), and a plurality of cylindrical rollers is disposed on the cage(8); when the test tube body(4) is spaced apart from the test tube pad(5), the test tube body(4) is coaxial with the test tube bin(7), and the test tube body(4) is spaced apart from the cylindrical rollers;
a plurality of gradient cavities is formed between the cage(8) and the test tube bin(7); the cylindrical rollers are located in the gradient cavities in one-to-one correspondence; the cylindrical roller is spaced apart from, and then prop and press against the test tube body(4) each other when moving in the gradient cavity(13); and
the cage(8) is connected to the rotating shaft(6), that is, the rotating shaft(6) can drive the cage(8) to rotate.

3. The test tube cap(3) screwing device according to claim 2, wherein the gradient cavity(13) is an arc-shaped cavity.

4. The test tube cap(3) screwing device according to claim 3, wherein the cylindrical rollers and the gradient cavities are both aligned around an axis of the cage(8).

5. The test tube cap(3) screwing device according to claim 2, wherein magnets are installed on the test tube bin(7), and the magnets are installed at the center of the gradient cavity(13) and are configured to generate a magnetic force to attract the cylindrical roller.

6. The test tube cap(3) screwing device according to claim 5, wherein a plurality of magnets is provided, and the plurality of magnets, the plurality of gradient cavities and the plurality of cylindrical rollers are installed in one-to-one correspondence.

7. The test tube cap(3) screwing device according to claim 1, wherein the rotating assembly further includes a base(9), a bearing(12) is installed on the base(9), the test tube bin(7) is installed on the base(9) and props against the bearing(12), and the test tube bin(7) can rotate relative to the base(9) around an axis of the test tube bin(7).

## Patentansprüche

1. Schraubvorrichtung für Reagenzglas-Kappe (3), einschließend:
eine Greifeinheit (1) zum Greifen einer Reagenzglas-Kappe (3) und
eine rotierende Einheit (2), die der Greifeinheit (1) direkt zugewandt ist und Folgendes einschließt:
eine Klemmanordnung, einschließend einen Reagenzglasbehälter (7) zur Aufnahme des Reagenzglaskörpers (4), eine Reagenzglas-Unterlage (5), eine Zylinderwalze (10), und
eine rotierende Anordnung, einschließend eine rotierende Welle (6), die ausgelegt ist, um den Reagenzglasbehälter (7) in Drehung zu versetzen,
**dadurch gekennzeichnet, dass**
die Reagenzglas-Unterlage (5) an der Unterseite des Reagenzglasbehälters (7) angeordnet ist und eine Seite der Reagenzglas-Unterlage (5), die dem Reagenzglaskörper (4) zugewandt ist, als Neigung angeordnet ist, wobei die Greifeinheit (1), wenn ein Kappenschraubvorgang für den Reagenzglaskörper (4) erforderlich ist, die Reagenzglas-Kappe (3) greift, die Reagenzglas-Kappe (3) auf den Reagenzglaskörper (4) setzt und den Reagenzglaskörper (4) drückt und der Reagenzglaskörper (4) nach unten gedrückt wird, um an der Reagenzglas-Unterlage (5) abgestützt zu werden, und entlang der Neigung der Reagenzglas-Unterlage (5) geneigt wird und an der Zylinderwalze (10) abgestützt wird.

2. Schraubvorrichtung für Reagenzglas-Kappe (3) nach Anspruch 1, wobei die Klemmanordnung zudem einen Käfig (8) einschließt und eine Vielzahl von Zylinderwalzen auf dem Käfig (8) angeordnet ist, wobei der Reagenzglaskörper (4) koaxial zum Reagenzglasbehälter (7) angeordnet ist und der Reagenzglaskörper (4) von den Zylinderwalzen beabstandet ist, wenn der Reagenzglaskörper (4) von der Reagenzglas-Unterlage (5) beabstandet ist,
und eine Vielzahl von abfallenden Hohlräumen zwischen dem Käfig (8) und dem Reagenzglasbehälter (7) gebildet ist, die Zylinderwalzen in den abfallenden Hohlräumen in Eins-zu-eins-Übereinstimmung befindlich sind, die Zylinderwalzen vom Reagenzglaskörper (4) beabstandet sind und dann einander gegen diesen drücken und an diesem abgestützt werden, wenn sie sich im abfallenden Hohlraum (13) bewegen, und
der Käfig (8) mit der rotierenden Welle (6) verbunden ist, das heißt, dass die rotierende Welle (6) den Käfig (8) in Drehung versetzen kann.

3. Schraubvorrichtung für Reagenzglas-Kappe (3) nach Anspruch 2, wobei der abfallende Hohlraum (13) ein bogenförmiger Hohlraum ist.

4. Schraubvorrichtung für Reagenzglas-Kappe (3) nach Anspruch 3, wobei die Zylinderwalzen und die abfallenden Hohlräume beide rund um eine Achse des Käfigs (8) ausgerichtet sind.

5. Schraubvorrichtung für Reagenzglas-Kappe (3) nach Anspruch 2, wobei Magnete auf dem Reagenzglasbehälter (7) montiert sind und die Magnete an der Mitte des abfallenden Hohlraums (13) montiert und ausgelegt sind, um eine Magnetkraft zu erzeugen, um die Zylinderwalze anzuziehen.

6. Schraubvorrichtung für Reagenzglas-Kappe (3) nach Anspruch 5, wobei eine Vielzahl von Magneten bereitgestellt ist und die Vielzahl von Magneten, die Vielzahl von abfallenden Hohlräumen und die Vielzahl von Zylinderwalzen in Eins-zu-eins-Übereinstimmung montiert sind.

7. Schraubvorrichtung für Reagenzglas-Kappe (3) nach Anspruch 1, wobei die rotierende Anordnung zudem eine Basis (9) einschließt, ein Lager (12) auf der Basis (9) montiert ist, der Reagenzglasbehälter (7) auf der Basis (9) montiert ist und am Lager (12) abgestützt wird und der Reagenzglasbehälter (7) sich relativ zur Basis (9) rund um eine Achse des Reagenzglasbehälters (7) drehen kann.

## Revendications

1. Dispositif de vissage de bouchon de tube à essai (3), comportant :
une unité de préhension (1) pour saisir un bouchon de tube à essai (3) ; et
une unité rotative (2) faisant directement face à l'unité de préhension (1) et comportant :
un ensemble de serrage comportant un bac de tube à essai (7) pour recevoir le corps de tube à essai (4), un tampon de tube à essai (5), un rouleau cylindrique (10) ; et
un ensemble rotatif comportant un arbre rotatif (6) configuré pour entraîner le bac de tube à essai (7) en rotation ;
**caractérisé en ce que**
un tampon de tube à essai (5) est disposé au fond du bac de tube à essai (7) ; et un côté du tampon de tube à essai (5) faisant face au corps de tube à essai (4) est formé en pente, dans lequel, lorsqu'une action de vissage de bouchon est requise pour le corps de tube à essai (4), l'unité de préhension (1) saisit le bouchon de tube à essai (3), place le bouchon de tube à essai (3) sur le corps de tube à essai (4) et presse le corps de tube à essai (4), et le corps de tube à essai (4) est pressé vers le bas pour s'appuyer contre le tampon de tube à essai (5) et devient incliné le long de la pente du tampon de tube à essai (5) et s'appuie contre le rouleau cylindrique (10).

2. Dispositif de vissage de bouchon de tube à essai (3) selon la revendication 1, dans lequel l'ensemble de serrage comporte en outre une cage (8), et une pluralité de rouleaux cylindriques est disposée sur la cage (8) ; lorsque le corps de tube à essai (4) est écarté du tampon de tube à essai (5), le corps de tube à essai (4) est coaxial avec le bac de tube à essai (7), et le corps de tube à essai (4) est écarté des rouleaux cylindriques ;
une pluralité de cavités à gradient est formée entre la cage (8) et le bac de tube à essai (7) ; les rouleaux cylindriques sont situés dans les cavités à gradient en correspondance biunivoque ; le rouleau cylindrique est écarté de, puis appuyé et pressé contre le corps de tube à essai (4) l'un par rapport à l'autre lors de son déplacement dans la cavité à gradient (13) ; et
la cage (8) est reliée à l'arbre rotatif (6), c'est-à-dire l'arbre rotatif (6) peut entraîner la cage (8) en rotation.

3. Dispositif de vissage de bouchon de tube à essai (3) selon la revendication 2, dans lequel la cavité à gradient (13) est une cavité en forme d'arc.

4. Dispositif de vissage de bouchon de tube à essai (3) selon la revendication 3, dans lequel les rouleaux cylindriques et les cavités à gradient sont tous deux alignés autour d'un axe de la cage (8).

5. Dispositif de vissage de bouchon de tube à essai (3) selon la revendication 2, dans lequel des aimants sont installés sur le bac de tube à essai (7), et les aimants sont installés au centre de la cavité à gradient (13) et sont configurés pour générer une force magnétique pour attirer le rouleau cylindrique.

6. Dispositif de vissage de bouchon de tube à essai (3) selon la revendication 5, dans lequel une pluralité d'aimants est fournie, et la pluralité d'aimants, la pluralité de cavités à gradient et la pluralité de rouleaux cylindriques sont installés en correspondance biunivoque.

7. Dispositif de vissage de bouchon de tube à essai (3) selon la revendication 1, dans lequel l'ensemble rotatif comporte en outre une base (9), un palier (12) est installé sur la base (9), le bac de tube à essai (7) est installé sur la base (9) et s'appuie contre le palier (12), et le bac de tube à essai (7) peut tourner par rapport à la base (9) autour d'un axe du bac de tube à essai (7).
